(19) 

Europäisches
Patentamt

European
Patent Office

Office européen
des brevets

(11) **EP 4 624 152 A1**

(12) **EUROPEAN PATENT APPLICATION**
published in accordance with Art. 153(4) EPC

(43) Date of publication:
**01.10.2025 Bulletin 2025/40**

(21) Application number: **23894446.6**

(22) Date of filing: **10.11.2023**

(51) International Patent Classification (IPC):
**B32B 27/30** (2006.01)   **B29C 51/14** (2006.01)
**B32B 27/00** (2006.01)   **B32B 27/36** (2006.01)

(52) Cooperative Patent Classification (CPC):
**B29C 51/14; B32B 27/00; B32B 27/30; B32B 27/36**

(86) International application number:
**PCT/JP2023/040572**

(87) International publication number:
**WO 2024/111437 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **21.11.2022   JP 2022185741**

(71) Applicant: **Teijin Limited**
**Osaka-shi, Osaka 530-0005 (JP)**

(72) Inventors:
• **OKADA, Youhei**
  **Osaka-shi, Osaka 530-0005 (JP)**
• **KAIZAWA, Noya**
  **Osaka-shi, Osaka 530-0005 (JP)**

(74) Representative: **Kraus & Lederer PartGmbB**
**Thomas-Wimmer-Ring 15**
**80539 München (DE)**

(54) **THERMOFORMING SHEET AND DECORATIVE SHEET**

(57)    It is to provide a thermoforming sheet which can be reduced or suppressed in the occurrence of floating of a releasable layer in stacking of a functional layer, a design layer, or the like, and which is excellent in handleability and thermoformability.

A thermoforming sheet of the present disclosure is obtained by stacking at least three layers of a layer (A layer) comprising a thermoplastic resin, a layer (B layer) formed from an uncured product of a (meth)acrylate-based active energy ray-curable resin composition (composition B), and a layer (C layer) releasable from the B layer in the listed order, wherein $\beta1 - \alpha1$ is -0.5% or more and 5.0% or less when a percentage of elongation in an MD direction at 100°C of the C layer is defined as $\beta1$ (%) and a percentage of elongation in an MD direction at 100°C of a stacked product obtained by releasing the C layer from the thermoforming sheet is defined as $\alpha1$ (%).

Fig. 1

**Description**

FIELD

The present disclosure relates to a thermoforming sheet and a decorative sheet.

BACKGROUND

In recent years, molded parts made of resins have been increasingly adopted in automobiles because of, for example, requirements for diversification of designing of automobiles or weight reduction of automobiles. These resin molded parts are demanded to have designs of wood tone, metallic tone, and the like, and functions such as chemical resistance and scratch resistance.

Housings and front plates for electronic equipment and the like are also demanded to have designability and three-dimensional shapes, as well as functions such as chemical resistance and scratch resistance, and resin molded articles are suitably used therefor.

As procedures for imparting designs and imparting functions, procedures have been proposed which include integration of sheets with specified designs or functions imparted, such as decorative sheets, together with resin molded articles. The following two procedures can be exemplified as specific examples:

(1) Method including preliminarily forming a sheet into a specified shape by thermoforming (vacuum forming, pressure forming, or the like), mounting this in an injection mold, and injecting a melted resin to form an injection-molded product and simultaneously integrate the product with the preliminarily formed sheet.
(2) Method including covering a resin molded article preliminarily produced, with a sheet, by thermoforming (three-dimensional surface decoration forming).

Both the methods (1) and (2) essentially include thermoforming of a sheet, and a thermoforming sheet, to be used, generally has a hard coat layer in order to have chemical resistance and scratch resistance.

For example, PTL 1 discloses a hard coat film for insert molding, the film having a substrate film and a hard coat layer formed on a surface of the substrate film, in which the hard coat layer is configured by a composition curable with ionization radiation, and the hard coat layer has an indentation hardness at 30°C of 10 to 200 N/mm$^2$ and an indentation hardness at 150°C of 100 N/mm$^2$ or less, as measured by a nanoindentation method.

PTL 2 discloses a stacked hard coat film for shaping, obtained by providing a hard coat layer containing a resin, on a substrate film, in which the percentage of elongation of the stacked hard coat film, under an atmosphere at 23°C and 50% **RH,** is 10% or more.

PTL 3 discloses a stacked member for decoration, having a protection film, a coating layer, and a resin substrate in the listed order, in which

the protection film has a pressure-sensitive adhesive layer contacting with the coating layer, and the surface roughness Rz(a) of a surface of such a pressure-sensitive adhesive layer which is in a state of being not contact with the coating layer, the surface being located facing the coating layer, and the surface roughness Rz(b) of an opposite surface to the resin substrate, of the coating layer, in a non-warmed specimen of the stacked member, the specimen having the coating layer from which the protection film is released at a rate of 5.0 mm/sec, and the resin substrate, exhibit a relationship of

$$85\% < Rz(b)/Rz(a) \times 100 \leq 110\% \quad (1),$$

the surface roughness Rz (b) and the surface roughness Rz (bh) of an opposite surface to the resin substrate, of the coating layer, in a warmed specimen obtained by warming the non-warmed specimen under an atmosphere at 150 to 190°C for 30 to 60 seconds satisfy at least one of the following (2) and (3):

$$0\% \leq Rz(bh)/Rz(b) \times 100 < 30\% \quad (2),$$

$$0 \leq Rz(bh) \leq Rz(b) < 0.5 \ \mu m \quad (3);$$

and
the coating layer has an unreacted (meth)acryloyl group, and the unreacted (meth)acryloyl group in the coating layer, which is in a state of irradiation of the warmed specimen with an active energy ray at 500 mJ/cm$^2$, disappears by 10 to 100% as compared with the unreacted (meth)acryloyl group in the coating layer of the non-warmed specimen.

[CITATION LIST]

[PATENT LITERATURE]

[PTL 1] International Publication No. WO 2022/014674
[PTL 2] Japanese Unexamined Patent Publication (Kokai) No. 2012-210755
[PTL 3] International Publication No. WO 2020/116576

SUMMARY

[TECHNICAL PROBLEM]

When a thermoforming sheet including a hard coat layer is thermoformed into a predetermined shape, the hard coat layer is usually thermoformed in a state of being uncured in order to prevent breaking during thermoforming, namely, in order to enhance thermoformability. The hard coat layer, which is in a state of being uncured, has a soft surface and is easily subject to any failure such as scratching, and therefore, in the case of a thermoforming sheet including such a layer, a protection film having release performance is generally applied to such a hard coat layer in consideration of handleability or the like.

If the adhesion force of the protection film to the hard coat layer is too strong, namely, if release performance of the protection film is too poor, the protection film cannot be easily released from the hard coat layer, and therefore the operating efficiency may be deteriorated. On the other hand, if the adhesion force of the protection film to the hard coat layer is too weakened in order to increase the operating efficiency, namely, if release performance of the protection film is too increased, for example, a state may be caused in which the protection film is partially peeled from the hard coat layer and the protection film substantially floats from the hard coat layer in stacking of a functional layer, a design layer, or the like. Such floating of the protection film may deteriorate the presentation at the time of shipment of a molded article produced by application of the thermoforming sheet, or, if a functional layer, a design layer, or the like is stacked and heat-treated and then the protection film is released under the occurrence of such floating of the protect film, an appearance failure like wrinkles or scratches, corresponding to a floating portion of the protection film, may be caused on a surface of the hard coat layer.

Accordingly, an object of the present disclosure is to provide a thermoforming sheet which can be reduced or suppressed in the occurrence of floating of a releasable layer in stacking of a functional layer, a design layer, or the like, and which is excellent in handleability and thermoformability.

[SOLUTION TO PROBLEM]

<Aspect 1>

A thermoforming sheet obtained by stacking at least three layers of

a layer (A layer) comprising a thermoplastic resin,
a layer (B layer) formed from an uncured product of a (meth)acrylate-based active energy ray-curable resin composition (composition B), and
a layer (C layer) releasable from the B layer
in the listed order, wherein
$\beta 1 - \alpha 1$ is -0.5% or more and 5.0% or less when a percentage of elongation in an MD direction at 100°C of the C layer is defined as $\beta 1$ (%) and a percentage of elongation in an MD direction at 100°C of a stacked product obtained by releasing the C layer from the thermoforming sheet is defined as $\alpha 1$ (%).

<Aspect 2>

The thermoforming sheet according to Aspect 1, wherein $\beta 1 - \beta 2$ is -2.0% or more and 4.0% or less when a percentage of elongation in a TD direction at 100°C of the C layer is defined as $\beta 2$ (%).

<Aspect 3>

The thermoforming sheet according to Aspect 1 or 2, wherein the C layer comprises an unstretched thermoplastic resin layer or a biaxially stretched thermoplastic resin layer.

<Aspect 4>

The thermoforming sheet according to any of Aspects 1 to 3, wherein a release force from the B layer in the C layer is 10 mN/25 mm or more and 1,000 mN/25 mm or less.

<Aspect 5>

The thermoforming sheet according to any of Aspects 1 to 4, wherein a protrusion-like defect having a height of 5 $\mu$m or more and an area of 0.1 mm$^2$ or more, present on a surface of the C layer, the surface being located facing the B layer, is at a rate of 10 defects/m$^2$ or less.

<Aspect 6>

The thermoforming sheet according to any of Aspects 1 to 5, wherein a surface roughness (Sa) of the C layer, the surface being located facing the B layer, is 150 nm or less.

<Aspect 7>

The thermoforming sheet according to any of Aspects 1 to 6, wherein a percentage of reaction of the (meth) acrylate contained in the B layer is 2% or more and 50% or less.

<Aspect 8>

The thermoforming sheet according to any of Aspects 1 to 7, wherein the C layer comprises at least one resin selected from the group consisting of a polycarbonate-based resin, polypropylene and a modified polyolefin-based resin.

<Aspect 9>

The thermoforming sheet according to any of Aspects 1 to 8, wherein the A layer comprises a polycarbonate-based resin.

<Aspect 10>

The thermoforming sheet according to Aspect 9, wherein the A layer contains 1 to 20 parts by mass of a polyester-based thermoplastic elastomer based on 100 parts by mass of the polycarbonate-based resin.

<Aspect 11>

The thermoforming sheet according to any of Aspects 1 to 10, wherein the thermosetting sheet comprises a layer (D layer) comprising a (meth)acrylic resin, between the A layer and the B layer.

<Aspect 12>

A decorative sheet comprising a design layer on a surface of the A layer of the thermoforming sheet according to any of Aspects 1 to 11, the surface being located opposite to the B layer.

[ADVANTAGEOUS EFFECTS OF INVENTION]

According to the present disclosure, it is possible to provide a thermoforming sheet which can be reduced or suppressed in the occurrence of floating of a releasable layer in stacking of a functional layer, a design layer, or the like, and which is excellent in handleability and thermoformability.

BRIEF DESCRIPTION OF DRAWING

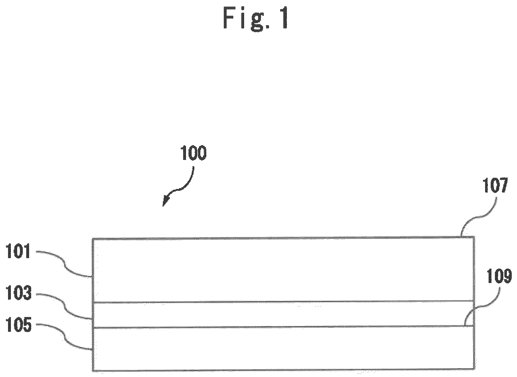

FIG. 1 is a cross-sectional view of a thermoforming sheet of one embodiment of the present disclosure.

DESCRIPTION OF EMBODIMENTS

Hereinafter, embodiments of the present disclosure are described in detail. The present disclosure is not limited to the following embodiments, and can be variously modified and carried out within the gist of the invention.

The thermoforming sheet of the present disclosure is configured by stacking at least three layers of a layer (A layer) comprising a thermoplastic resin, a layer (B layer) formed from an uncured product of a (meth)acrylate-based active energy ray-curable resin composition (composition B), and a layer (C layer, sometimes referred to as "releasable layer".) releasable from the B layer, in the listed order, and also B1 - $\alpha$1 is -0.5% or more and 5.0% or less when the percentage of elongation in an MD direction at 100°C of the C layer is defined as $\beta$1 (%) and the percentage of elongation in an MD direction at 100°C of a stacked product obtained by releasing the C layer from the thermoforming sheet is defined as $\alpha$1 (%). In the present disclosure, the "percentage of elongation in an MD direction at 100°C" and the "percentage of elongation in a TD direction at 100°C" mean respectively the percentages of change in length in the MD direction and the TD direction in heating of each layer from room temperature (25°C) to 100°C.

While not limited by any theory, the action principle in which the thermoforming sheet of the present disclosure can be reduced or suppressed in the occurrence of floating of a releasable layer (C layer) and is excellent in handleability, thermoformability, and the like is considered as follows.

The releasable layer exhibits release performance on a surface (109) of a C layer (105) serving as the releasable layer, the surface being located facing a B layer (103), as illustrated in FIG. 1, in order to allow for release from the B layer. Such a surface can be increased in release performance, thereby resulting in easy release of the B layer from the releasable layer and an enhancement in handleability. On the other hand, it is considered that such a releasable layer is peeled from the B layer also by, for example, deformation stress applied during heat treatment, to result in formation of any gap between the C layer (105) as the releasable layer and the B layer (103), thereby causing the occurrence of a floating portion in which the releasable layer (C layer) substantially floats. It is then considered that such a floating portion of the releasable layer can sometimes cause the occurrence of any appearance failure such as scratches or wrinkles on a surface of a cured layer. In other words, it is considered that such any appearance failure can occur as a result of curing of the B layer in a state in which an uncured layer is deformed with following any gap on the floating portion of the releasable layer.

The present inventors have predicted that the difference in stress occurring between the releasable layer and the uncured layer during heat treatment is due to the occurrence of the floating portion of the releasable layer, and have made intensive studies. As a result, the inventors have found that, in a case where, for example, a functional layer, a design layer, or the like is stacked and heat-treated and, with respect to the temperature (a temperature of about 100°C) applied here, the difference between the percentage of elongation according to thermal expansion of the releasable layer and the percentage of elongation according to thermal expansion of a stacked product other than the releasable layer in the thermoforming sheet is small, the occurrence of the floating portion of the releasable layer can be reduced or suppressed. The reason for this is considered because the elongation according to thermal expansion of the releasable layer and the elongation according to thermal expansion of a stacked product other than the releasable layer are at the same level and both the layers are elongated at the same level, for example, in the case of stacking and heat treatment of a functional layer, a design layer, or the like, thereby resulting in a reduction of the difference in stress occurring between the releasable layer and the uncured layer.

Thus, even if a releasable layer excellent in release performance is adopted, the thermoforming sheet of the present disclosure can be reduced or suppressed in the occurrence of the floating portion of the releasable layer, for example, in handling of such a sheet and in stacking and heat treatment of a functional layer, a design layer, or the like, and therefore it is considered that the thermoforming sheet can be enhanced in handleability in an uncured state and can satisfy both formability and an excellent appearance.

The definitions of the terms in the present disclosure are as follows.

**In** the present disclosure, "in the listed order" means that, when there is focused on three constituent members of the A layer, the B layer and the C layer, the thermoforming sheet comprises these constituent members in the listed order, and, for example, any other layer such as a layer (D layer) comprising a (meth)acrylic resin may be interposed between the A layer and the B layer.

**In** the present disclosure, "(meth)acrylic" means acrylic or methacrylic, and "(meth)acrylate" means acrylate or methacrylate.

<<Thermoforming sheet>>

The thermoforming sheet of the present disclosure comprises, for example, at least three layers of a layer (101 (A layer)) comprising a thermoplastic resin, a layer (103 (B layer)) formed from an uncured product of a (meth)acrylate-based active energy ray-curable resin composition (composition B), and a layer (105 (C layer)) releasable from the B layer in the listed order, as illustrated in FIG. 1.

First, each of the layers constituting the thermoforming sheet of the present disclosure is described below.

<Layer (A layer) comprising thermoplastic resin>

The thermoforming sheet of the present disclosure comprises a layer (A layer) comprising a thermoplastic resin. Such a layer may be a single layer or may have a stacked configuration of two or more layers. When the A layer has a configuration of two or more layers, such respective layers can also be referred to as, for example, "A1 layer" and "A2 layer" in order to distinguish such respective layers in the A layer.

The thermoplastic resin is not particularly limited, and examples thereof can include polyolefin-based resins such as polyethylene, polypropylene, and poly(4-methylpentene-1), ring-opening metathesis polymers of norbornenes, addition polymers, cycloolefins such as addition copolymers with other olefins, biodegradable polymers such as polylactic acid and polybutyl succinate, polyamide-based resins (also including semi-aromatic polyamide) such as nylon 6, 11, 12, and 66, polymethyl methacrylate, polyvinyl chloride, polyvinylidene chloride, polyvinyl alcohol, polyvinyl butyral, ethylene-vinyl acetate copolymer, polyacetal, polyglycolic acid, polystyrene, styrene-copolymerized polymethyl methacrylate, polycarbonate-based resins, polyester-based resins such as polypropylene terephthalate, polyethylene terephthalate (PET), polyethylene isophthalate (IAPET), polybutylene terephthalate (PBT), and polyethylene-2,6-naphthalate (PEN), polyether sulfone, polyether ketone, modified polyphenylene ether, polyphenylene sulfide, polyetherimide, polyimide, polyarylate, tetrafluoroethylene-hexafluoropropylene copolymers, polyvinylidene fluoride, and acrylonitrile-butadiene-styrene copolymerized copolymers. The thermoplastic resin can be used singly or in combination of two or more kinds thereof.

In particular, the layer (A layer) comprising a thermoplastic resin preferably comprises a polycarbonate-based resin from the viewpoint of thermoformability, the suppression effect of the floating portion of the releasable layer, or the like.

The polycarbonate-based resin used in the A layer is a polymer in which a dihydroxy compound is linked by a carbonate ester bond, and is usually one obtained by reacting a dihydroxy component and a carbonate precursor by an interfacial polymerization method or a melt polymerization method.

Representative examples of the dihydroxy component include 2,2-bis(4-hydroxyphenyl)propane (popular name: bisphenol A), 2,2-bis{(4-hydroxy-3-methyl)phenyl}propane (bisphenol C), 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)cyclohexane, 1,1-bis(4-hydroxyphenyl)-3,3,5-trimethylcyclohexane, 1,1-bis(4-hydroxyphenyl)octane, 1,1-bis(4-hydroxyphenyl)decane, 9,9-bis{(4-hydroxy-3-methyl)phenyl}fluorene, 9,9-bis(4-hydroxyphenyl)fluorene, $\alpha,\alpha'$-bis(4-hydroxyphenyl)-m-diisopropylbenzene, isosorbide, 1,3-propanediol, 1,4-butanediol, and 1,6-hexanediol. There may be here adopted a homopolymer in which such a component is used singly, or a copolymer in which two or more such components are copolymerized. Bisphenol A is preferred in terms of physical properties and cost. In the present disclosure, polycarbonate is preferred in which 50% by mol or more, more preferably 70% by mol or more, further preferably 90% by mol or more of a bisphenol component corresponds to bisphenol A and/or bisphenol C.

Examples of specific polycarbonate can include a homopolymer of bisphenol A, a homopolymer of bisphenol C, a binary copolymer of bisphenol A and bisphenol C, a binary copolymer of bisphenol A and 1,1-bis(4-hydroxyphenyl)-3,3,5-trimethylcyclohexane, and a binary copolymer of bisphenol A and 9,9-bis{(4-hydroxy-3-methyl)phenyl}fluorene. A homopolymer of bisphenol A is most preferred.

The carbonate precursor used here is, for example, carbonyl halide, carbonate ester or haloformate, and specific examples include phosgene, diphenyl carbonate or dihaloformate of dihydric phenol.

When the dihydric dihydroxy compound and the carbonate precursor are reacted by an interfacial polymerization method or a melt polymerization method to produce a polycarbonate resin, for example, a catalyst, an end terminator, and an antioxidant such as a dihydric phenol may also be used, if necessary. The polycarbonate resin may be a branched polycarbonate resin obtained by copolymerization of a tri- or higher polyfunctional aromatic compound, may be a polyester carbonate resin obtained by copolymerization of an aromatic or aliphatic difunctional carboxylic acid, or may be a mixture obtained by mixing two or more polycarbonate resins obtained.

The molecular weight of the polycarbonate-based resin, when represented by the viscosity average molecular weight, is preferably in the range of 13,000 to 40,000. This range can allow any failure such as breaking or burr during thermoforming to be suitably suppressed, and also allow melt film forming to be suitably realized. The molecular weight is more preferably 15,000 to 35,000, further preferably 20,000 to 32,000, particularly preferably 22,000 to 28,000. When the polycarbonate resin is a mixture of two or more kinds thereof, the molecular weight of the entire mixture is represented. The viscosity average molecular weight is here determined by measuring the specific viscosity ($\eta_{sp}$) at 20°C of a solution in which 0.7 g of polycarbonate is dissolved in 100 mL of methylene chloride, and calculating the viscosity average molecular weight (M) from the following Equations 1 and 2:

$$\eta_{sp}/c = [\eta] + 0.45 \times [\eta]^2 c \qquad \text{Equation 1}$$

$$[\eta] = 1.23 \times 10^{-4} \, M^{0.83} \qquad \text{Equation 2}$$

(wherein c is 0.7 g of /dL and [$\eta$] is the limiting viscosity.)

The glass transition temperature (Tg) of the layer (A layer) comprising the polycarbonate-based resin is preferably in the range of 100°C or more and 145°C or less from the viewpoint of thermoformability and the like. The glass transition temperature of the layer is more preferably 110°C or more and 140°C or less, particularly preferably 120°C or more and 130°C or less. The glass transition temperature refers to a value measured by a differential scanning calorimetry (DSC) method.

The adjustment method of the glass transition temperature of the A layer is not particularly limited, and the procedure is preferred in which a polyester-based thermoplastic elastomer is blended with a polycarbonate-based resin in order to ensure transparency of the thermoforming sheet. The polyester-based thermoplastic elastomer is preferably a multi-block copolymer configured from a hard segment composed of a polybutylene terephthalate unit and a soft segment composed of a polyester unit including an aromatic dicarboxylic acid and an aliphatic dicarboxylic acid as dicarboxylic acid components and a diol having 5 to 15 carbon atoms as a diol component.

The hard segment composed of a polybutylene terephthalate unit is excellent in compatibility with the polycarbonate-based resin, is preferred from the viewpoint of transparency, thermoformability and the like, and can exhibit favorable characteristics also in terms of strength and the like. The polybutylene terephthalate may contain any other component as a copolymerization component as long as the effects of the present disclosure are not impaired. The proportion of such a copolymerization component, as that of each of both the dicarboxylic acid components and the diol component in 100% by mol of all the components, is preferably 30% by mol or less, more preferably 20% by mol or less, further preferably 10% by mol or less. The intrinsic viscosity of the polymer serving as the hard segment is preferably in the range of 0.2 to 2.0, more preferably 0.5 to 1.5.

The soft segment composed of a polyester unit including an aromatic dicarboxylic acid and an aliphatic dicarboxylic acid as dicarboxylic acid components and a diol having 5 to 15 carbon atoms as a diol component refers to a segment in which a polymer formed from the soft segment has a melting point of 100°C or less, or is liquid at 100°C and exhibits amorphousness. The intrinsic viscosity of the polymer serving as the soft segment is preferably in the range of 0.2 to 2.0, more preferably 0.5 to 1.5. The soft segment used is a soft segment (hereinafter, sometimes referred to as "SS-1") composed of a polyester unit including an aromatic dicarboxylic acid and/or an aliphatic carboxylic acid as dicarboxylic acid component(s) and a diol having 5 to 15 carbon atoms as a diol component. SS-1 is suitable from the viewpoint that extremely favorable transparency is obtained.

**In** the soft segment SS-1, from the viewpoint that more favorable transparency is obtained, preferably, the content of the aromatic dicarboxylic acid is 60 to 99% by mol and the content of the aliphatic dicarboxylic acid is 1 to 40% by mol in 100% by mol of the total dicarboxylic acid component. More preferably, the content of the aromatic dicarboxylic acid is 70 to 95% by mol and the content of the aliphatic dicarboxylic acid is 5 to 30% by mol. Further preferably, the content of the aromatic dicarboxylic acid is 85 to 93% by mol and the content of the aliphatic dicarboxylic acid is 7 to 15% by mol. Particularly preferably, the content of the aromatic dicarboxylic acid is 89 to 92% by mol and the content of the aliphatic dicarboxylic acid is 8 to 11% by mol.

The aromatic dicarboxylic acid of SS-1 is suitably at least one selected from the group consisting of terephthalic acid, isophthalic acid, 1,5-naphthalene dicarboxylic acid, 2,6-naphthalene dicarboxylic acid, 4,4'-diphenylcarboxylic acid, bis(4-carboxyphenyl)methane and bis(4-carboxyphenyl)sulfone, more suitably terephthalic acid and isophthalic acid, and, in particular, isophthalic acid is suitable from the viewpoint of a reduction in crystallinity.

The aliphatic dicarboxylic acid of SS-1 is suitably a linear aliphatic dicarboxylic acid having 4 to 12 carbon atoms, such as succinic acid, adipic acid, and sebacic acid, particularly suitably sebacic acid.

The diol component having 5 to 15 carbon atoms of SS-1 is more preferably a linear aliphatic diol having 6 to 12 carbon atoms, such as hexamethylene glycol, decamethylene glycol, 3-methylpentane diol, and 2-methyloctamethylene diol, particularly preferably hexamethylene glycol.

SS-1 is particularly preferred from the viewpoint of allowing one high in compatibility with the polycarbonate resin and high in transparency to be obtained and of allowing for favorable surface properties and transparency after thermoforming. SS-1 is more specifically preferably a polyester composed of isophthalic acid and sebacic acid, and hexamethylene glycol.

**In** the present disclosure, the proportion between the hard segment and the soft segment in the polyester-based thermoplastic elastomer in 100% by mass of the elastomer is preferably set so that the proportion of the hard segment is 20 to 70% by mass and the proportion of the soft segment is 80 to 30% by mass, more preferably set so that the proportion of the hard segment is 20 to 40% by mass and the proportion of the soft segment is 80 to 60% by mass. The intrinsic viscosity of the polyester-based thermoplastic elastomer is preferably in the range of 0.6 or more, more preferably in the range of 0.8 to 1.5, further preferably in the range of 0.8 to 1.2 from the viewpoint of sheet strength. The intrinsic viscosity is a value measured at 35°C in o-chlorophenol.

The glass transition temperature of the A layer can be set within a suitable range, as a result, thermoformability can be enhanced, and therefore the polyester-based thermoplastic elastomer is preferably contained in the A layer in the range of 1 part by mass or more, 3 parts by mass or more, or 5 parts by mass or more, 20 parts by mass or less, 18 parts by mass or less, or 15 parts by mass or less based on 100 parts by mass of the polycarbonate-based resin in the A layer.

The thickness of the A layer is not particularly limited, and can be appropriately set depending on the intended use of the thermoforming sheet. For example, the thickness of the A layer is preferably in the range of 20 to 3,000 $\mu$m, more preferably in the range of 30 to 2,500 $\mu$m, further preferably in the range of 40 to 2,000 $\mu$m, particularly preferably in the range of 50 to 1,500 $\mu$m, most preferably in the range of 100 to 1,000 $\mu$m from the viewpoint of thermoformability and the like.

It is necessary in the thermoforming sheet of the present disclosure that $\beta 1 - \alpha 1$ be -0.5% or more and 5.0% or less when the percentage of elongation in the MD direction at 100°C of a releasable layer (C layer) described below is defined as $\beta 1$ (%) and the percentage of elongation in the MD direction at 100°C of a stacked product obtained by releasing the C layer from the thermoforming sheet is defined as $\alpha 1$ (%). As long as this condition is satisfied, each percentage of elongation in the MD direction and/or the TD direction at 100°C of the A layer is not particularly limited, and such each percentage of elongation, for example, can be 0% or more, more than 0%, 0.1% or more, 0.3% or more, 0.5% or more, 0.7% or more, or 1.0% or more, and can be 10% or less, 8.0% or less, 6.0% or less, 5.0% or less, 3.0% or less, or 1.0% or less. The percentage of elongation in the present disclosure can be determined by a method described in Examples below.

Various components can be appropriately compounded in the A layer in the present disclosure, as long as the effects of the present disclosure are not affected. Examples of such an optional component include a heat stabilizer, am antioxidant, an ultraviolet absorber, an antistatic agent, a dye, a pigment, and a reinforcement filler (for example, glass fiber). Such a component can be used singly or in combination of two or more kinds thereof.

(Layer (B layer) formed from uncured product of (meth)acrylate-based active energy ray-curable resin composition (composition B))

The uncured product of a (meth)acrylate-based active energy ray-curable resin composition (composition B) constituting the B layer of the thermoforming sheet of the present disclosure contains a (meth)acrylate-based resin such as (meth)acrylate or urethane(meth)acrylate. The content in the total solid content of the B layer is preferably in the range of 70 to 95% by mass. Such a range not only imparts excellent productivity, but also can more enhance performance of a coating film, for example, aggregation force, chemical resistance, scratch resistance, and optical characteristics. In the present disclosure, "uncured" means a non-completely cured state, and encompasses not only a concept of a non-cured state, but also a concept of a semi-cured state being some cured state.

The percentage of reaction of the (meth)acrylate contained in the B layer in a state of being uncured is preferably 1% or more, 2% or more, 3% or more, 4% or more, or 5% or more, and preferably 50% or less, 40% or less, 30% or less, 20% or less, or 10% or less. When the percentage of reaction of the (meth)acrylate is within such a range, the B layer is substantially in a semi-cured state and is reduced in tackiness, thereby allowing for not only an enhancement in operation ability, but also an enhancement in flexibility of the B layer itself, and therefore can allow for suitable following even to a complicated shape during thermoforming. The percentage of reaction of the (meth)acrylate can be adjusted by, for example, the amount of irradiation with ultraviolet light.

The(meth)acrylate-based resin contained in the B layer in the present disclosure may be any of an oligomer and a prepolymer, and is not particularly limited.

The glass transition temperature of the uncured product of the (meth)acrylate-based resin composition (composition B) is preferably 30 to 150°C, further preferably 35 to 140°C, particularly preferably 40 to 130°C. Such a range can allow for more reduction or suppression of any failure such as blocking during winding with a roller and breaking during thermoforming.

The pencil hardness of a cured layer after curing by irradiation of the uncured product of the (meth)acrylate-based resin composition (composition B) with an active energy ray such as ultraviolet light is preferably H or more or 2H or more. The upper limit of the pencil hardness is not particularly limited, and can be 5H or less, 4H or less, or 3H or less. When the pencil hardness of the cured layer is within such a range, wear resistance and scratch resistance can be more enhanced.

The pencil hardness here refers to a value determined by irradiating a dried sheet coated with the uncured product of the (meth)acrylate-based resin composition (composition B) with ultraviolet light in a cumulative amount of light 2,000 mJ/cm$^2$, to cure a coating film and thus provide a test piece, and measuring the pencil hardness of the coating film in the test piece, according to JIS K5600-5-4-1999, as described in Examples below.

In the present disclosure, the B layer can contain a photopolymerization initiator. The photopolymerization initiator can be contained, thereby allowing polymerization curing reaction of the hard coat layer by light (ultraviolet light) irradiation to be performed in a short time. Examples of the photopolymerization initiator include benzophenone, benzyl, Michler's ketone, 2-chlorothioxanthone, 2,4-diethylthioxanthone, benzoin ethyl ether, benzoin isopropyl ether, benzoin isobutyl ether, 2,2-diethoxyacetophenone, benzyl dimethyl ketal, 2,2-dimethoxy-1,2-diphenylethan-1-one, 2-hydroxy-2-methyl-1-phenylpropane-1-one, 1-hydroxycyclohexylphenyl ketone, 2-methyl-1-[4-(methylthio)phenyl]-2-morpholinopropanone-1, 1-[4-(2-hydroxyethoxy)-phenyl]-2-hydroxy-2-methyl-1-propan-1-one, bis(cyclopentadienyl)-bis(2,6-difluoro-3-(pyl-1-yl)titanium, and 2-benzyl-2-dimethylamino-1-(4-morpholinophenyl)-butanone-1, and 2,4,6-trimethylbenzoyldiphenylphosphine oxide. The photopolymerization initiator can be used singly or in combination of two or more kinds thereof.

The content of the photopolymerization initiator in the solid content of the B layer, in the total solid content of the B layer, is preferably 0.01 to 10% by mass, further preferably 0.1 to 5% by mass. Such a range can allow favorable photo-curability to be exhibited, and also can allow any failure such as coloration of the B layer and the production cost to be reduced or suppressed. For example, known various dyes and sensitizers can also be added in order to enhance photo-curability.

The thickness of the B layer is not particularly limited, and can be appropriately set so that desired performance (for example, desired wear resistance) depending on the application can be exerted. For example, the thickness of the B layer is preferably in the range of 1 to 50 $\mu$m, more preferably in the range of 2 to 30 $\mu$m, further preferably in the range of 2.5 to 20 $\mu$m, particularly preferably in the range of 3 to 10 $\mu$m, from the viewpoint of wear resistance and scratch resistance.

It is necessary in the thermoforming sheet of the present disclosure that $\beta 1 - \alpha 1$ be -0.5% or more and 5.0% or less when the percentage of elongation in the MD direction at 100°C of a releasable layer (C layer) described below is defined as $\beta 1$ (%) and the percentage of elongation in the MD direction at 100°C of a stacked product obtained by releasing the C layer from the thermoforming sheet is defined as $\alpha 1$ (%). As long as this condition is satisfied, each percentage of elongation in the MD direction and/or the TD direction at 100°C of the B layer is not particularly limited, and such each percentage of elongation, for example, can be 0% or more, more than 0%, 0.1% or more, 0.3% or more, 0.5% or more, 0.7% or more, or 1.0% or more, and can be 10% or less, 8.0% or less, 6.0% or less, 5.0% or less, 3.0% or less, or 1.0% or less. When the thickness of the B layer is thin to make it difficult to measure the percentage of elongation of the B layer singly, the percentage of elongation of the B layer can be determined by, for example, applying the B layer to the A layer, measuring the percentage of elongation in such a state, and subtracting the percentage of elongation of the single A layer.

Various compounds can be appropriately compounded in the B layer in the present disclosure as long as the effects of the present disclosure are not affected. Examples of such an optional component can include a leveling agent, a defoamer, an antifouling agent (for example, surfactant), a surface modifier, and a filler (for example, organic filler and inorganic filler). Such a component can be used singly or in combination of two or more kinds thereof.

<Layer (C layer) releasable from B layer>

The thermoforming sheet of the present disclosure comprises a layer (C layer: releasable layer) releasable from the B layer. The C layer exhibits performance of protection of the B layer during handling, heat treatment and/or the like of the sheet, and therefore can also be referred to as "protection layer" or "protection film". The B layer, in particular the B layer after drying, does not exhibit pressure-sensitive adhesiveness, and therefore the C layer can comprise a pressure-sensitive adhesive layer releasable from the B layer and a support layer supporting the pressure-sensitive adhesive layer. The C layer can contain these two layers, and the support layer can also be referred to as "C1 layer" and the pressure-sensitive adhesive layer can also be referred to as "C2 layer" in order to distinguish these layers in the C layer. While the C layer may also be applied indirectly to the B layer with any other layer being interposed therebetween, the C layer is preferably applied directly to the B layer from the viewpoint of the suppression effect of the floating portion of the releasable layer, and the like.

The C layer, for example, the support layer (C1 layer) constituting the C layer is preferably an unstretched thermoplastic resin layer or a biaxially stretched thermoplastic resin layer from the viewpoint of thermoformability, handleability, the suppression effect of the floating portion of the releasable layer, and the like. Such a thermoplastic resin layer may be in the form of a film or a sheet.

The thermoplastic resin constituting the thermoplastic resin layer is not particularly limited, and examples thereof can include polyolefin-based resins such as polyethylene, polypropylene, and poly(4-methylpentene-1), or modified polyolefin-based resins in which such resins are modified with unsaturated ethylenic carboxylic acid or the like, ring-opening metathesis polymers of norbornenes, addition polymers, cycloolefins such as addition copolymers with other olefins, biodegradable polymers such as polylactic acid and polybutyl succinate, polyamide-based resins (also including semi-aromatic polyamide) such as nylon 6, 11, 12, and 66, polymethyl methacrylate, polyvinyl chloride, polyvinylidene chloride, polyvinyl alcohol, polyvinyl butyral, ethylene-vinyl acetate copolymer, polyacetal, polyglycolic acid, polystyrene, styrene-copolymerized polymethyl methacrylate, polycarbonate-based resins, polyester-based resins such as polypropylene terephthalate, polyethylene terephthalate (PET), polyethylene isophthalate (IAPET), polybutylene terephthalate (PBT), and polyethylene-2,6-naphthalate (PEN), polyether sulfone, polyether ketone, modified polyphenylene ether, polyphenylene sulfide, polyetherimide, polyimide, polyarylate, tetrafluoroethylene-hexafluoropropylene copolymers, polyvinylidene fluoride, and acrylonitrile-butadiene-styrene copolymerized copolymers. The thermoplastic resin can be used singly or in combination of two or more kinds thereof.

In particular, the thermoplastic resin is preferably at least one selected from the group consisting of a polycarbonate-based resin, polypropylene and a modified polyolefin-based resin from the viewpoint of thermoformability, handleability, the suppression effect of the floating portion of the releasable layer, and the like. The polycarbonate-based resin used in the A layer can be here similarly used as the polycarbonate-based resin.

When the C layer comprises the pressure-sensitive adhesive layer (C2 layer), a pressure-sensitive adhesive for formation of a pressure-sensitive adhesive layer releasable from the B layer is not particularly limited, and, for example, a (meth)acrylic polymer, natural rubber, synthetic rubber, a polyolefin-based polymer, a polyester-based polymer, a polyether-based polymer, a polyurethane-based polymer, a silicone-based polymer, or any other polymer can be used. The pressure-sensitive adhesive can be used singly or in combination of two or more kinds thereof.

The release force of the C layer from the B layer (B layer after drying) can be appropriately adjusted by, for example, compounding a pressure-sensitive adhesion force modifier to the pressure-sensitive adhesive layer (C2 layer) constituting the C layer. The release force is preferably in the range of 10 mN/25 mm or more, 15 mN/25 mm or more, or 20 mN/25 mm or more, 1,000 mN/25 mm or less, 800 mN/25 mm or less, 500 mN/25 mm or less, 450 mN/25 mm or less, or 400 mN/25 mm or less, from the viewpoint of handleability (operation ability) during release of the releasable layer (C layer), the suppression effect of the floating portion of the releasable layer, and the like. The release force can be determined by a method described in Examples below.

The C layer used in the thermoforming sheet of the present disclosure is not particularly limited with respect to the percentage of elongation ($\beta1$) in the MD direction at 100°C of the C layer as long as $\beta1 - \alpha1$ is -0.5% or more and 5.0% or less when the percentage of elongation in the MD direction at 100°C of the C layer is defined as $\beta1$ (%) and the percentage of elongation in the MD direction at 100°C of a stacked product obtained by releasing the C layer from the thermoforming sheet is defined as $\alpha1$ (%). The percentage of elongation ($\beta1$), for example, can be 0% or more, more than 0%, 0.1% or more, 0.3% or more, 0.5% or more, 0.7% or more, or 1.0% or more, and can be 10% or less, 8.0% or less, 6.0% or less, or 5.0% or less.

The percentage of elongation ($\beta2$) in the TD direction at 100°C of the C layer is, for example, can be 0% or more, more than 0%, 0.1% or more, 0.3% or more, 0.5% or more, 0.7% or more, or 1.0% or more, and can be 10% or less, 8.0% or less, 6.0% or less, or 5.0% or less.

The thickness of the C layer is not particularly limited, and can be appropriately set so that the desired performance (for example, protection performance) is obtained. For example, the thickness of the C layer is preferably in the range of 10 to 100 $\mu$m, more preferably in the range of 15 to 50 $\mu$m, further preferably in the range of 15 to 30 $\mu$m from the viewpoint of protection performance or the like of the B layer.

Various components can be appropriately compounded in the C layer in the present disclosure as long as the effects of the present disclosure are not affected. Examples of such an optional component include a heat stabilizer, an antioxidant, an ultraviolet absorber, an antistatic agent, pressure-sensitive adhesion force modifier, a dye, a pigment, and a reinforcement filler (for example, glass fiber). Such a component can be used singly or in combination of two or more kinds thereof.

In some embodiments, in the C layer in the present disclosure, a protrusion-like defect having a height of 5 $\mu$m or more and an area of 0.1 $mm^2$ or more, present on a surface of the C layer, the surface being located facing the B layer, is preferably at a rate of 10 defects/$m^2$ or less, 8 defects/$m^2$ or less, 5 defects/$m^2$ or less, 3 defects/$m^2$ or less, 2 defects/$m^2$ or less, or 1 defects/$m^2$ or less. The lower limit value with respect to such a defect is not particularly limited, and can be, for example, 0 defects/$m^2$ or more or more than 0 defects/$m^2$. When the proportion of the protrusion-like defect is within such a range, the surface appearance of the B layer after curing can be more enhanced. The protrusion-like defect can be determined by a method described in Examples below.

In some embodiments, in the C layer in the present disclosure, the surface roughness (Sa) of a surface (109) of the C layer, the surface contacting with the B layer, as illustrated in FIG. 1 is preferably 150 nm or less, 120 nm or less, 100 nm or less, 80 nm or less, or 50 nm or less. The lower limit value with respect to such a surface roughness is not particularly limited, and can be, for example, 1 nm or more, 5 nm or more, 10 nm or more, or 15 nm or more. When the surface roughness is within such a range, the surface appearance of the B layer after curing can be more enhanced. The surface roughness (Sa) can be determined by a method described in Examples below.

<β1 - α1>

The thermoforming sheet of the present disclosure and a decorative sheet prepared with the sheet can be generally subjected to a temperature of about 20°C to 100°C during stacking of a functional layer, a design layer, or the like with such a sheet. Accordingly, thermal expansion of each layer in such a sheet can be maximum at about 100°C, and therefore it is necessary in the thermoforming sheet of the present disclosure and a decorative sheet prepared with the sheet that β1 - α1 be -0.5% or more and 5.0% or less when the percentage of elongation in the MD direction (mechanical direction) at 100°C of the releasable layer (C layer) is defined as β1 (%) and the percentage of elongation in the MD direction at 100°C of a stacked product obtained by releasing the C layer from the thermoforming sheet is defined as α1 (%). The β1 - α1 is within such a range, and thus, for example, in the case of stacking and heat treatment of a functional layer, a design layer, or the like, the occurrence of floating of the releasable layer can be reduced or suppressed, and handleability, thermoformability, and the like of the thermoforming sheet or the decorative sheet can be enhanced. The range of β1 - α1 is more preferably more than -0.5%, -0.4% or more, -0.3% or more, -0.2% or more, or -0.1% or more, and less than 5.0%, 4.5% or less, 4.0% or less, 3.5% or less, 3.0% or less, or 2.5% or less. Herein, the temperature applied in stacking of a functional layer, a design layer, or the like in the present disclosure does not exclude a temperature of more than 100°C.

<β2 - α2>

In some embodiments, in the thermoforming sheet of the present disclosure, β2 - α2 can be - 1.0% or more and 5.0% or less when the percentage of elongation in the TD direction (width direction) at 100°C of the releasable layer (C layer) is defined as β2 (%) and the percentage of elongation in the TD direction at 100°C of a stacked product obtained by releasing the C layer from the thermoforming sheet is defined as α2 (%). When β2 - α2 is within such a range, the occurrence of floating of the releasable layer during thermoforming can be more reduced or suppressed, and handleability, thermoformability, and the like of the thermoforming sheet or the decorative sheet can be more enhanced. The range of β2-α2 is more preferably more than -1.0%, -0.8% or more, -0.5% or more, -0.4% or more, -0.3% or more, -0.2% or more, or -0.1% or more, and less than 5.0%, 4.5% or less, 4.0% or less, 3.5% or less, 3.0% or less, or 2.5% or less.

<β1 - β2 >

In some embodiments, in the thermoforming sheet of the present disclosure, β1 - β2 can be - 2.0% or more and 4.0% or less with respect to β1 and β2 described above. When β1 - β2 is within such a range, floating of the releasable layer (C layer) can be more reduced or suppressed. The range of β1 - β2 is more preferably -1.8% or more, -1.5% or more, -1.3% or more, -1.0% or more, -0.8% or more, -0.5% or more, -0.4% or more, -0.3% or more, -0.2% or more, or -0.1% or more, and less than 4.0%, 3.5% or less, 3.0% or less, 2.5% or less, 2.0% or less, 1.5% or less, or 1.0% or less.

<Optional layer>

The thermoforming sheet of the present disclosure may further comprise one or more optional layers depending on the intended use as long as the effects of the present disclosure are not affected. Such an optional layer is not limited to the following, and, for example, the following layer can be adopted.

(Layer (D layer) comprising (meth)acrylic resin)

In some embodiments, the thermoforming sheet of the present disclosure can comprise a layer (D layer) comprising a (meth)acrylic resin. The D layer is preferably placed between the A layer and the B layer described above. The D layer can be applied, thereby hardly causing the occurrence of any appearance failure due to the variation in thickness and allowing for a more enhancement in performance of the thermoforming sheet, for example, hardness and scratch resistance. The D layer may be a single layer or may have a stacked configuration of two or more layers. When the D layer has a configuration of two or more layers, such respective layers can also be referred to as, for example, "D1 layer" and "D2 layer" in order to distinguish such respective layers in the D layer.

The (meth)acrylic resin used in the D layer is preferably one mainly including a polymer of methacrylate or acrylate. A copolymer is preferred which contains, as the (meth)acrylic resin, preferably 50% by mol or more, more preferably 70% by mol or more, further preferably 80% by mol or more, particularly preferably 90% by mol or more of methyl methacrylate.

Examples of other copolymerization component include ethyl methacrylate, butyl methacrylate, 2-ethylhexyl methacrylate, methyl acrylate, ethyl acrylate, butyl acrylate, and 2-ethylhexyl acrylate. Examples of other copolymerization component additionally include other ethylenically unsaturated monomer. Specific examples of the ethylenically unsaturated monomer include vinyl aromatic compounds such as styrene, α-methylstyrene, and vinyl toluene, diene-based compounds such as 1,3-butadiene and isoprene, alkenyl cyanogen compounds such as acrylonitrile and methacrylonitrile, acrylic acid, methacrylic acid, maleic anhydride, and N-substituted maleimide. The copolymerization component may be used singly or in combination of two or more kinds thereof. The content of the copolymerization component is preferably 0 to 50% by mass, more preferably 0 to 30% by mass, further preferably 0 to 20% by mass.

The method for producing the (meth)acrylic resin is not particularly limited, and, for example, an emulsion polymerization method, a suspension polymerization method, or a continuous polymerization method can be used.

Various components can be appropriately compounded in the D layer in the present disclosure as long as the effects of the present disclosure are not affected. Examples of such an optional component include a heat stabilizer, a colorant, a release agent, a lubricant, an antistatic agent, and a matting agent. Such a component can be used singly or in combination of two or more kinds thereof.

A rubber particle can also be compounded in the D layer for the purpose of enhancement, for example, an improvement in toughness. However, substantially no rubber particle is preferably compounded from the viewpoint that transparency and surface hardness are ensured. When a rubber particle is compounded, the amount of compounding thereof in the total solid content in the D layer can be, for example, 1% by mass or less, 0.5% by mass or less, or 0.1% by mass or less.

The thickness of the D layer is not particularly limited, and can be appropriately set depending on the intended use or the like of the thermoforming sheet. For example, the thickness of the D layer is preferably in the range of 5 to 300 μm, more preferably in the range of 8 to 250 μm, further preferably in the range of 10 to 200 μm, particularly preferably in the range of 20 to 150 μm, most preferably in the range of 30 to 100 μm from the viewpoint of thermoformability and the like.

(Design layer)

In some embodiments, the thermoforming sheet of the present disclosure can comprise a design layer. The design layer can be applied in any location of the thermoforming sheet, and is preferably applied to an opposite surface (107) to a B layer (103), of an A layer (101) in a thermoforming sheet (100), as illustrated in FIG. 1. A sheet obtained by thermoforming is typically cured in a state in which the C layer is released, and then used with the B layer serving as an upper surface. Accordingly, when the design layer is applied to an opposite surface to the B layer, of the A layer, the design layer can be protected by at least the B layer and the A layer. The design layer may be formed on the entire surface or a partial surface of a surface for application. Such a thermoforming sheet comprising the design layer can also be referred to as "decorative sheet".

The design layer is not particularly limited as long as it is a layer capable of exhibiting designability (decoration ability). Examples of the design layer can include a colored layer exhibiting a special color shade, metallic color, or the like, and a drawing pattern layer capable of imparting a pattern (for example, a wood grain or a stone pattern), a logo, a pictorial pattern, or the like. The design layer may be adopted singly or in combination of a plurality of kinds thereof.

The thickness of the design layer may be any of various thicknesses, and, for example, can be 1 μm or more, 2 μm or more, or 5 μm or more, or can be 50 μm or less, 30 μm or less, 10 μm or less, 8 μm or less, or 5 μm or less.

(Other layer)

There can be adopted, as an optional layer, any other functional layer capable of imparting an optional function, such as an antistatic layer, a conductive layer, a primer layer, or an adhesion layer.

<Thickness of thermoforming sheet or decorative sheet>

The thickness of the thermoforming sheet or the decorative sheet of the present disclosure is not particularly limited, and can be appropriately set depending on the intended use or the like of each of the sheets. For example, the thickness is, for example, preferably 0.05 mm or more and 3 mm or less, more preferably 0.1 mm or more and 2.5 mm or less, further preferably 0.15 mm or more and 2 mm or less, particularly preferably 0.2 mm or more and 1 mm or less from the viewpoint of handleability, thermoformability, decoration moldability, and the like.

<<Method for producing thermoforming sheet>>

The method for producing the thermoforming sheet of the present disclosure is not particularly limited. One example of the production method is shown below. The above-mentioned materials can be similarly used in various production methods in the present disclosure.

A single-layer sheet of the A layer constituting the thermoforming sheet of the present disclosure can be produced by, for example, a known extrusion method with a molding material A for the A layer, and a stacked sheet including the A layer and an optional D layer can be produced by, for example, a known co-extrusion method with a molding material A for the A layer and a molding material D for the D layer. The co-extrusion method is generally a method including melt-extruding the molding material A and the molding material D with separate extruders, and performing stacking with a feed block or a multi-manifold die to obtain a multi-layer sheet, and the total thickness and the thickness configuration of the resulting stacked sheet can be controlled by adjusting the amount of extrusion and the rate of film formation, the die lip interval, and the like in each extruder.

The sheet is obtained by sheet formation including tightly contacting a melted resin with a roller or a belt. Furthermore, the melted resin before cooling and solidification can be pressure-narrowed by a metal roller, to transfer a metal mirror surface, and therefore the surface appearance of the sheet can be improved. Examples of the metal elastic roller include one including a shaft roller and a cylindrical metallic thin film placed so as to cover the outer periphery of the shaft roller and contacted with the melted resin, in which a fluid temperature-controlled is enclosed between the shaft roller and the metallic thin film, or one in which a metal belt is wound on a surface of a rubber roller. **In** particular, a metal elastic roller in which a metal belt is wound around two or more rollers can provide cooling in a state in which the melted resin is pressure-narrowed with a more circular wide surface to allow no stress to remain in the resin.

The method for stacking the B layer constituting the thermoforming sheet of the present disclosure on the above single-layer sheet or stacked sheet is generally a coating method. The coating method is not particularly limited, and examples thereof can include a gravure coating method, a micro-gravure coating method, a fountain bar coating method, a slide die coating method, and a slot die coating method. These methods are coating methods involving easily adjusting coating film thicknesses.

**In** a coating process, the B layer can be formed by coating the above single-layer sheet or stacked sheet with a paint material obtained by dissolving or dispersing the (meth)acrylate-based active energy ray-curable resin composition (composition B), and, if necessary, a hindered amine-based compound, a photopolymerization initiator, any other optional component and/or the like in a proper solvent, and drying the resultant.

The solvent is not particularly limited, can be appropriately selected depending on the solubility of the composition B, and may be any solvent capable of allowing for uniform dissolution or dispersion of at least the solid content (resin, photopolymerization initiator, any other optional component). Examples of such a solvent include ketones (acetone, methyl ethyl ketone, methyl isobutyl ketone, cyclohexanone, and the like), ethers (dioxane, tetrahydrofuran, and the like), aliphatic hydrocarbons (hexane and the like), alicyclic hydrocarbons (cyclohexane, and the like), aromatic hydrocarbons (toluene, xylene, and the like), carbon halides (dichloromethane, dichloroethane, and the like), esters (methyl acetate, ethyl acetate, butyl acetate, and the like), alcohols (methanol, ethanol, isopropanol, butanol, cyclohexanol, and the like), cellosolves (methyl cellosolve, ethyl cellosolve, and the like), cellosolve acetates, sulfoxides, and amides. The solvent can be used singly or in combination of two or more kinds thereof.

The procedure for stacking the releasable layer (C layer) in the present disclosure is suitably, for example, lamination. Such lamination may be carried out at room temperature or with heating. In the case of lamination to be carried out at room temperature, the C layer preferably includes a releasable pressure-sensitive adhesive layer. In the case of heat lamination to be carried out with heating, the laminating temperature can be set so as to be higher than the glass transition temperature of the B layer, thereby softening and welding the B layer, and thus providing a desired interface adhesion strength with the C layer.

<<Method for producing decorative sheet>>

The thermoforming sheet of the present disclosure can be used as a decorative sheet by further application of the design layer to the sheet, as described above. The method for forming the design layer is not particularly limited, examples thereof include formation of a drawing pattern layer or the like by printing, and formation of a thin film layer of metal or metal oxide, and these can also be combined and used. When the design layer, the functional layer, and/or the like are/is applied to the thermoforming sheet, the sheet can be subjected typically to a temperature of about 20°C to 100°C, or about 60 to 100°C, but the temperature is not particularly limited thereto.

The printing method for forming the drawing pattern layer or the like is not particularly limited, and a known printing method, for example, gravure printing, planographic printing, flexographic printing, dry offset printing, pad printing, or screen printing can be used depending on the product shape and the application of printing. The material of the design layer, to be used in the case of formation of the design layer by such a printing method, can be, for example, a paint material in which a pigment such as an inorganic pigment, an organic pigment, or a bright material is dispersed in a binder resin.

The method for forming the thin film layer of metal or metal oxide is not particularly limited, and examples thereof include vapor deposition, a thermal spraying method, and a plating method. Examples of the vapor deposition method can include methods such as a vacuum vapor deposition method, sputtering, ion plating, a thermal CVD method, a plasma CVD method, and an optical CVD method. Examples of the thermal spraying method include an atmospheric pressure plasma spraying method and a low-pressure plasma spraying method. Examples of the plating method include an electroless plating method, a hot-dipping method, and an electroplating method.

<<Method for producing molded article>>

A molded article can be produced with the thermoforming sheet or the decorative sheet of the present disclosure by any of conventionally known various molding methods.

The molded article is not particularly limited, and examples thereof can include interior materials and exterior materials for automobiles, indicator panels for automobiles, electric appliances, cases for cosmetics, interior parts and exterior parts for building materials, cases for various instruments or products, cases for sundries, switches, keys, key pads, handles, levers, buttons, and housings or exterior components for home-appliances-AV equipment (for example, personal computers), cellular phones and mobile devices.

Examples of the method for forming the molded article include insert molding method being an in-mold decoration method in injection molding. This method is a method including mounting into a mold, the thermoforming sheet or the decorative sheet which is shaped by vacuum forming or pressure forming in advance so as to be along with the shape of an injection mold cavity, and injecting the melted resin thereinto to weld the thermoforming sheet or the decorative sheet to a resin molded article and thus integrate them, at the same time as injection molding, thereby obtaining the molded article. It is here preferable in the method for forming the molded article in the present disclosure to release the C layer functioning as a protection layer in the thermoforming sheet or the decorative sheet, from the sheet, before thermoforming after drying of the B layer, from the viewpoint of the appearance quality and the like of a final molded article.

Examples of any other forming method include a forming method including attaching the thermoforming sheet or the decorative sheet toward a mold cavity by vacuum pressure in advance, injecting the melted resin thereinto, and applying heat and pressure, thereby attaching the thermoforming sheet or the decorative sheet to a resin molded article, thereby obtaining the molded article.

Examples of any other forming method further include a method involving lamination by vacuum forming or pressure forming. The method for heating the thermoforming sheet or the decorative sheet, to be used during thermoforming, can be any of various methods with, for example, an infrared heater, electric heater, high-frequency induction, halogen lamp, microwave, high-temperature derivative (such as steam) or laser.

The above-mentioned forming methods can be generally each made at a temperature of about 140°C to 160°C depending on the process, but the temperature is not particularly limited thereto. Accordingly, the molded article produced is, if necessary, cooled or naturally cooled. Subsequently, the B layer applied to the molded article is cured by irradiation with an active energy ray (ultraviolet light, visible light, infrared light or electron beam). The active energy ray may be polarized or non-polarized. The active energy ray is particularly suitably ultraviolet light from the viewpoint of facility cost, safety, running cost, or the like. **In** the case of curing by irradiation with ultraviolet light, a photopolymerization initiator is typically used. Examples of the energy ray source usable for ultraviolet light include a high-pressure mercury lamp, a halogen lamp, a xenon lamp, a metal halide lamp, a nitrogen laser, an electron beam acceleration apparatus, and a radioactive element. The amount of irradiation with ultraviolet light is preferably in the range of 100 to 5,000 mJ/cm$^2$, more preferably in the range of 300 to 3,000 mJ/cm$^2$, in terms of the cumulative amount of exposure to ultraviolet light at a wavelength of 365 nm. When the amount of irradiation is within such a range, the B layer, which is more excellent in performance, for example, transparency and surface hardness, can be obtained.

The oxygen concentration during irradiation with the active energy ray is preferably 5% or less, more preferably 3% or less, particularly preferably 2% or less. Such an atmosphere low in oxygen concentration, or an atmosphere not containing oxygen can be obtained by, for example, replacing the atmosphere of an irradiation section in an irradiation apparatus, with an inert gas. Examples of the inert gas include nitrogen, helium, neon, and argon.

EXAMPLES

Hereinafter, the present invention is more specifically described with reference to Examples, but the present invention is not limited to only these Examples. Physical properties were measured by the following methods performed in Examples and Comparative Examples.

<<Example 1 to 15 and Comparative Example 1 to 10>>

<Methods for measuring various physical properties>

(Glass transition temperature)

The glass transition temperature was determined from the point of falling in measurement at a rate of temperature rise of 20°C/min with 2920-type DSC manufactured by TA Instruments.

(Thickness)

The thickness is the value at the center portion in the sheet width direction, as measured with an electronic film thickness micrometer manufactured by Anritsu Corp. The sheet width direction represents a direction perpendicular to the sheet flow direction (MD direction) during film formation.

(Percentage of elongation in MD direction at 100°C)

Five sample film pieces of 10 mm in the MD direction (mechanical direction) × 5 mm in the TD direction (width direction) were each cut out from a specimen piece in the width direction of the specimen piece, these were each subjected to application of a tensile force of 40 mN in the MD direction by TM-3000 manufactured by Shinku-Riko, Inc., and heated at 10°C/min in a nitrogen atmosphere, to measure elongation and contraction characteristics in the MD direction, and the amount of elongation at a temperature of 100°C was divided by the sample length, to determine the percentage of elongation (unit: %) in the MD direction at 100°C. In the Tables, the percentage of elongation is the average value of the percentages of elongation of the five pieces. Such specimen pieces used here were a releasable layer (C layer), and an unstretched stacked product before application of the C layer, not comprising the C layer (a stacked product composed of the A layer and the B layer, or a stacked product composed of the A layer, the B layer and the D layer). In the Tables, the percentage of elongation in the MD direction of the releasable layer (C layer) is designated as $\beta 1$ and the percentage of elongation in the MD direction of the stacked product is designated as $\alpha 1$.

(Percentage of elongation in TD direction at 100°C)

Five sample film pieces of 10 mm in the TD direction × 5 mm in the MD direction were each cut out from a specimen piece in the width direction of the specimen piece, these were each subjected to application of a tensile force of 40 mN in the TD direction by TM-3000 manufactured by Shinku-Riko, Inc., and heated at 10°C/min in a nitrogen atmosphere, to measure elongation and contraction characteristics in the TD direction, and the amount of elongation at a temperature of 100°C was divided by the sample length, to determine the percentage of elongation (unit: %) in the TD direction at 100°C. In the Tables, the percentage of elongation is the average value of the percentages of elongation of the five pieces. Such specimen pieces used here were a releasable layer (C layer), and an unstretched stacked product before application of the C layer, not comprising the C layer (a stacked product composed of the A layer and the B layer, or a stacked product composed of the A layer, the B layer and the D layer). In the Tables, the percentage of elongation in the TD direction of the releasable layer (C layer) is designated as $\beta 2$ and the percentage of elongation in the TD direction of the stacked product is designated as $\alpha 2$.

(Release force)

The thermoforming sheet was cut out to a size of 25 mm × 200 mm, the A layer of the thermoforming sheet, cut out, was attached to a SUS plate of 50 mm width × 250 mm length, such a SUS plate was fixed to a tensile tester (product name "Tensilon (trademark)" manufactured by Toyo Baldwin Co., Ltd.), and the C layer was released at an angle of 180° and a rate of release of 300 mm/min, to measure the load. This measurement was performed five times, and the average value was defined as the release force (unit: mN/25 mm).

(Surface roughness (Sa: arithmetic average height))

The surface roughness (Sa: arithmetic average height) was measured with a VK-9710 laser microscope manufactured by KEYENCE CORPORATION. This measurement was performed five times, and the average value was defined as the surface roughness (unit: nm).

(Protrusion-like defect)

Aluminum was vapor-deposited in vacuum onto a surface of the C layer, onto which the B layer is to be applied. This was observed with a VK-9710 laser microscope manufactured by KEYENCE CORPORATION, and the number of protrusion-like defects having a height of 5 $\mu$m or more and an area of 0.1 mm$^2$ or more was counted. The frequency of occurrence of fine protrusions was expressed by the number of such protrusions per meter. This measurement was performed five times. The average value is described in the Tables.

(Floating of C layer)

An uncured thermoforming sheet was heated with a hot air drier at 100°C for 60 minutes, the sheet was visually observed from the C layer side, and whether or not the C layer was peeled from the B layer to cause floating of the C layer was visually observed, and evaluated by the following criteria:

A: no floating of C layer observed.
B: floating of C layer slightly observed.
C: floating of C layer clearly observed.

(Formability)

The appearance of the sheet in a case where the C layer as a protection layer was released from the thermoforming sheet and then a biaxial stretching tester (manufactured by TOYO SEIKI Co., Ltd.) was used to preliminarily heat the resultant at a temperature of 150°C for 1 minute and then elongate the resultant at a stretching magnitude of 1.3 times at that temperature was evaluated by the following criteria:

A: neither cracking, nor clouding observed.
B: weak cracking or slight clouding observed.
C: cracking or clouding observed.

(Handleability during processing)

The handleability of the thermoforming sheet during formation and processing of the sheet was evaluated by the following criteria:

A: no stickiness observed, C layer not naturally released during handling, and C layer easily releasable.
B: stickiness slightly observed, or end of C layer naturally released during handling, or C layer not easily releasable.
C: stickiness observed, or C layer naturally released during handling, or C layer hardly releasable.

(Surface appearance of molded article)

After the C layer as a protection layer was released from the thermoforming sheet, a biaxial stretching tester (manufactured by TOYO SEIKI Co., Ltd.) was used to preliminarily heat the resultant at a temperature of 150°C for 1 minute and then elongate the resultant at a stretching magnitude of 1.3 times at that temperature, and the sheet was irradiated from the B layer side with ultraviolet light in a cumulative amount of light of 2,000 mJ/cm$^2$, to cure the B layer. The appearance of a sheet surface, namely, a surface of the B layer cured was evaluated by the following criteria:

A: no defects such as scratches, wrinkles, and/or unevenness observed.
B: defects such as scratches, wrinkles, and/or unevenness slightly observed.
C: defects such as scratches, wrinkles, and/or unevenness somewhat observed.
D: defects such as scratches, wrinkles, and/or unevenness clearly observed.

(Haze)

The haze value was measured with NDH-2000 (D65 light source) manufactured by NIPPON DENSHOKU INDUSTRIES Co., Ltd. This measurement was performed five times, and the average value was defined as the haze value (unit: %).

(Pencil hardness)

The pencil hardness of the B layer cured, in the sheet produced in the above evaluation "(Surface appearance of molded article)", was measured according to JIS K5600-5-4-1999.

<Preparation Example 1> (Production of polyester-based thermoplastic elastomer)

After 100 parts by mass of dimethyl isophthalate was subjected to transesterification reaction with 13 parts by mass of dimethyl sebacate and 80 parts by mass of hexamethylene glycol by a dibutyltin diacetate catalyst, polycondensation under reduced pressure was performed to provide an amorphous polyester (soft segment) having an intrinsic viscosity of 1.06 and not showing any endothermic peak due to crystal melting in measurement by a DSC method. To 100 parts by mass of the polyester was added 32 parts by mass of a pellet of polybutylene terephthalate having an intrinsic viscosity of 0.98 (hard segment), reaction was further made at 240°C for 45 minutes, and then 0.03 parts by mass of phenylphosphonic acid was added to terminate the reaction. The resulting polymer had a melting point of 190°C and an intrinsic viscosity of 0.93.

<Example 1>

(Molding material A)

Each of a polycarbonate resin pellet (Panlite L1250WP manufactured by Teijin Ltd. (homopolycarbonate resin of bisphenol A (PC-A, viscosity average molecular weight 23,900)), and the thermoplastic elastomer obtained in Preparation Example 1 was preliminarily dried in advance, 10 parts by mass of the thermoplastic elastomer was mixed with respect to 100 parts by mass of the polycarbonate resin pellet, by a V-type blender, and then the resultant was extruded with a twin-screw extruder at a cylinder temperature of 260°C to provide a pellet, thereby providing a molding material A for the A layer. The glass transition temperature of the molding material A was 120°C.

(Molding material D)

As a molding material D for the D layer, an acrylic resin (Acrypet VH-001 manufactured by Mitsubishi Rayon Co., Ltd., acrylic resin by copolymerization of 95% by mol of methyl methacrylate and 5% by mol of methyl acrylate) was provided.

(Co-extrusion)

The molding material A and the molding material D were extruded in a feed block system from a T die having a width of 650 mm with a single-screw extruder of a screw diameter of 40 mm, respectively, under conditions of cylinder temperatures of 260°C (molding material A) and 250°C (molding material D), and numbers of screw revolutions of 109 rpm (molding material A) and 11 rpm (molding material D), and the melted resin was pressure-narrowed by a metal roller and a metal sleeve roller and cooled, then subjected to edge-trimming and wound at a rate of winding of 10.3 m/min, thereby producing a stacked sheet having a two-layer structure of A layer/D layer (A layer about 200 $\mu$m, D layer about 100 $\mu$m) and having a width of about 400 mm and a thickness of about 0.3 mm.

(Preparation of paint material)

A paint material for B layer formation was prepared by diluting 100 parts by mass of a urethane acrylate-based ultraviolet-curable resin "PHOLUCID (trademark) No.371C (product name)" (solid content 40%, manufactured by Chugoku Marine Paints, Ltd.), 5 parts by mass of Irgacure (trademark) 184 (photopolymerization initiator, manufactured by Ciba Specialty Chemicals), and 3 parts by mass of a hindered amine-based compound TINUVIN (trademark) 292 (product name)" (manufactured by BASF SE) with methyl isobutyl ketone until the solid content concentration of the ultraviolet-curable resin in the paint material reached 30%, and sufficiently stirring the resultant.

(Coating)

The D layer of the stacked sheet of the A layer and the D layer was coated with the above paint material for B layer formation, by use of a bar coater (#8), and dried by hot air in a drying furnace at 100°C for 5 minutes, thereby forming a B layer having a coating film thickness of 5 $\mu$m. The percentage of reaction of acrylate was here 5%. Furthermore, a protection film (C layer) was placed on the B layer, and pressure-narrowed by a nip roller, thereby producing a thermoforming sheet having a thickness of about 0.37 mm. Various evaluation results were shown in Tables 1 to 3. The protection film (C layer) used here was PCLR manufactured by Teijin Ltd., being a film which had a total thickness of about 70 $\mu$m and in which an acrylic pressure-sensitive adhesive layer was applied to a polycarbonate support layer. PC, PP, PO, PE, and PET, described in "Type of resin" and "Type of pressure-sensitive adhesion" of "Protection film" (C layer) in each Table, respectively means polycarbonate, polypropylene, polyolefin, polyethylene, and polyethylene terephthalate.

<Examples 2 to 11>

Each thermoforming sheet was produced in the same manner as in Example 1 except that, in "(Coating)" step, the protection film (C layer) was changed to each film shown in Table 1. Various evaluation results were shown in Table 1. Films described as "Protection film" (C layer) in each Table are FSA-010C manufactured by FUTAMURA CHEMICAL CO., LTD., MX157N manufactured by Nihon Matai Co., Ltd., A-1, SPV-TP-4030, SPV-V420, B-2 and SPV-C6010 manufactured by Nitto Denko Corporation, FM-325 manufactured by Daio Paper Corporation, R415A and 7H52 manufactured by Toray Industries, Inc., UM1010 manufactured by Tredegar Corp, and JA13K and NSA22T manufactured by Sun A Kaken Co., Ltd.

<Example 12>

A thermoforming sheet was produced in the same manner as in Example 1 except that the thermoplastic elastomer obtained in Preparation Example 1 was not compounded in "(Molding material A)". Various evaluation results were shown in Table 2.

<Example 13>

A thermoforming sheet was produced in the same manner as in Example 1 except that, in"(Co-extrusion)" step, the molding material D was not used, namely, a single-layer sheet having a single-layer structure (A layer 300 μm) composed of the A layer and having a width of 400 mm was produced. Various evaluation results were shown in Table 2.

<Example 14>

A thermoforming sheet was produced in the same manner as in Example 1 except that, in "(Coating)" step, hot air drying was performed in a drying furnace at 80°C for 1 minute to semi-cure the B layer so that the percentage of reaction of acrylate was 1%. Various evaluation results were shown in Table 2.

<Example 15>

A thermoforming sheet was produced in the same manner as in Example 1 except that, in "(Coating)" step, the sheet was irradiated from the B layer side with ultraviolet light in a cumulative amount of light of 50 mJ/cm$^2$ to semi-cure the B layer so that the percentage of reaction of acrylate was 30%. Various evaluation results were shown in Table 2.

<Comparative Example 1>

A thermoforming sheet was produced in the same manner as in Example 1 except that, in "(Coating)" step, no protection film (C layer) was used. Various evaluation results were shown in Table 3.

<Comparative Examples 2 to 5>

Each thermoforming sheet was produced in the same manner as in Example 1 except that, in "(Coating)" step, the sheet was irradiated from the B layer with ultraviolet light in a cumulative amount of light of 2,000 mJ/cm$^2$ to cure the B layer so that the percentage of reaction of acrylate was 70%, and, in "(Coating)" step, the protection film (C layer) was changed to each film shown in Table 3. Various evaluation results were shown in Table 3.

<Comparative Examples 6 to 9>

Each thermoforming sheet was produced in the same manner as in Example 1 except that, in "(Coating)" step, hot air drying was performed in a drying furnace at 80°C for 5 minutes to semi-cure the B layer so that the percentage of reaction of acrylate was 3%, and, in "(Coating)" step, the protection film (C layer) was changed to each film shown in Table 3. Various evaluation results were shown in Table 3.

Table 1

| Configuration | | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|---|
| Configuration | A layer | Polycarbonate (PC) resin | | - | PC-A | PC-A | PC-A | PC-A | PC-A | PC-A | PC-A | PC-A | PC-A | PC-A | PC-A |
| | | Content of elastomer /100 parts by mass of PC resin | | parts by mass | 10 | 10 | 10 | 10 | 10 | 10 | 10 | 10 | 10 | 10 | 10 |
| | | Glass transition temperature (Tg) | | °C | 120 | 120 | 120 | 120 | 120 | 120 | 120 | 120 | 120 | 120 | 120 |
| | D layer | Type of resin | | - | VH-001 | VH-001 | VH-001 | VH-001 | VH-001 | VH-001 | VH-001 | VH-001 | VH-001 | VH-001 | VH-001 |
| | | Glass transition temperature (Tg) | | °C | 110 | 110 | 110 | 110 | 110 | 110 | 110 | 110 | 110 | 110 | 110 |
| | B layer | Type of resin | | - | Urethane acrylate | Urethane acrylate | Urethane acrylate | Urethane acrylate | Urethane acrylate | Urethane acrylate | Urethane acrylate | Urethane acrylate | Urethane acrylate | Urethane acrylate | Urethane acrylate |
| | | Content ratio of hindered amine-based compound /100 parts by mass of composition B | | parts by mass | 3 | 3 | 3 | 3 | 3 | 3 | 3 | 3 | 3 | 3 | 3 |
| | | Percentage of reaction of acrylate | | % | 5 | 5 | 5 | 5 | 5 | 5 | 5 | 5 | 5 | 5 | 5 |
| | Thickness of stacked product excluding C layer | | | mm | 0.3 | 0.3 | 0.3 | 0.3 | 0.3 | 0.3 | 0.3 | 0.3 | 0.3 | 0.3 | 0.3 |
| | Percentage of elongation ($\alpha$1) of stacked product in MD direction at 100°C | | | % | 0.7 | 0.7 | 0.7 | 0.7 | 0.7 | 0.7 | 0.7 | 0.7 | 0.7 | 0.7 | 0.7 |
| | Percentage of elongation ($\alpha$2) of stacked product in TD direction at 100°C | | | % | 0.7 | 0.7 | 0.7 | 0.7 | 0.7 | 0.7 | 0.7 | 0.7 | 0.7 | 0.7 | 0.7 |
| | C layer | Protection film | | - | PCLR | FSA-010-C | MX157N | A-1 | SPV-TP-4030 | SPV-TP-4030 | FM-325 | JA13K | R415A | UM1010 | SPV-V420 |

19

| | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| | | Type of resin | - | PC | PP | PP | PO | Modified PO | Modified PO | PP | PP | PP | PP | PO |
| | | Type of pressure-sensitive adhesion | - | Acryl | PO | Modified PO | Synthetic rubber | Synthetic rubber | Synthetic rubber | Acryl | Acryl | PE | PE | Synthetic rubber |
| | | Thickness | μm | 70 | 30 | 28 | 35 | 35 | 35 | 45 | 30 | 30 | 27 | 50 |
| | | Release force | mN/25 mm | 40 | 24 | 11 | 18 | 90 | 90 | 483 | 37 | 540 | 25 | 200 |
| | | Percentage of elongation ($\beta$1) in MD direction at 100°C | % | 0.6 | 1.3 | 4.8 | 4.4 | 2.6 | 2.6 | 1.6 | 2.9 | 4.4 | 4.8 | 1.6 |
| | | Percentage of elongation ($\beta$2) in TD direction at 100°C | % | 0.6 | -0.1 | 5.6 | 4 | 4.2 | 4.2 | 1.6 | 2.9 | 4.4 | 0.5 | 4.1 |
| | | Difference in percentage of elongation ($\beta$1 - $\beta$2) between MD-TD directions | % | 0 | 1.4 | -0.8 | 0.4 | -1.6 | -1.6 | 0 | 0 | 0 | 4.3 | -2.5 |
| | | Difference in percentage of elongation ($\beta$1 - $\alpha$1) from stacked product in MD direction | % | -0.1 | 0.6 | 4.1 | 3.7 | 1.9 | 1.9 | 0.9 | 2.2 | 3.7 | 4.1 | 0.9 |
| | | Difference in percentage of elongation ($\beta$2 - $\alpha$2) from stacked product in TD direction | % | -0.1 | -0.8 | 4.9 | 3.3 | 3.5 | 3.5 | 0.9 | 2.2 | 3.7 | -0.2 | 3.4 |

(continued)

| | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| | | Surface roughness (Sa) | nm | 29 | 44 | 43 | 29 | 24 | 24 | 55 | 91 | 159 | 171 | 63 |
| | | Protrusion-like defect | defects/m2 | 0.3 | 0.6 | 0.2 | 3.1 | 5.2 | 13 | 0.5 | 0.8 | 0.2 | 0.1 | 1.3 |
| | Total thickness of thermoforming sheet | | mm | 0.37 | 0.33 | 0.33 | 0.34 | 0.34 | 0.34 | 0.35 | 0.33 | 0.33 | 0.33 | 0.35 |
| Evaluation results | Floating of C layer | | - | A | A | B | A | A | A | A | A | A | B | B |
| | Formability | | - | A | A | A | A | A | A | A | A | A | A | A |
| | Handleability during processing | | - | A | A | B | A | A | A | B | A | B | A | A |
| | Surface appearance of molded article | | - | A | A | A | B | B | C | A | A | A | A | A |
| | Haze | | % | 1.6 | 1.2 | 0.8 | 0.9 | 0.5 | 0.5 | 3.1 | 11.9 | 17 | 8 | 1.3 |
| | Pencil hardness of C layer after curing | | - | 3H | 3H | 3H | 3H | 3H | 3H | 3H | 3H | 3H | 3H | 3H |

Table 2

| | | | | Example 12 | Example 13 | Example 14 | Example 15 |
|---|---|---|---|---|---|---|---|
| Configuration | A layer | Polycarbonate (PC) resin | - | PC-A | PC-A | PC-A | PC-A |
| | | Content of elastomer /100 parts by mass of PC resin | parts by mass | 0 | 10 | 10 | 10 |
| | | Glass transition temperature (Tg) | °C | 145 | 120 | 120 | 120 |
| | D layer | Type of resin | - | VH-001 | - | VH-001 | VH-001 |
| | | Glass transition temperature (Tg) | °C | 110 | - | 110 | 110 |
| | B layer | Type of resin | - | Urethane acrylate | Urethane acrylate | Urethane acrylate | Urethane acrylate |
| | | Content ratio of hindered amine-based compound /100 parts by mass of composition B | parts by mass | 3 | 3 | 3 | 3 |
| | | Percentage of reaction of acrylate | % | 5 | 5 | 1 | 30 |
| | Thickness of stacked product excluding C layer | | mm | 0.3 | 0.3 | 0.3 | 0.3 |
| | Percentage of elongation ($\alpha$1) of stacked product in MD direction at 100°C | | % | 0.7 | 0.7 | 0.7 | 0.7 |
| | Percentage of elongation ($\alpha$2) of stacked product in TD direction at 100°C | | % | 0.7 | 0.7 | 0.7 | 0.7 |
| | C layer | Protection film | - | PCLR | PCLR | PCLR | PCLR |
| | | Type of resin | - | PC | PC | PC | PC |
| | | Type of pressure-sensitive adhesion | - | Acryl | Acryl | Acryl | Acryl |
| | | Thickness | $\mu$m | 70 | 70 | 70 | 70 |
| | | Release force | mN/25 mm | 40 | 40 | 40 | 40 |
| | | Percentage of elongation ($\beta$1) in MD direction at 100°C | % | 0.6 | 0.6 | 0.6 | 0.6 |
| | | Percentage of elongation ($\beta$2) in TD direction at 100°C | % | 0.9 | 0.9 | 0.9 | 0.9 |

(continued)

| | | | | Example 12 | Example 13 | Example 14 | Example 15 |
|---|---|---|---|---|---|---|---|
| | | Difference in percentage of elongation ($\beta1$ - $\beta2$) between MD-TD directions | % | -0.3 | -0.3 | -0.3 | -0.3 |
| | | Difference in percentage of elongation ($\beta1$ - $\alpha1$) from stacked product in MD direction | % | -0.1 | -0.1 | -0.1 | -0.1 |
| | | Difference in percentage of elongation ($\beta2$ - $\alpha2$) from stacked product in TD direction | % | 0.2 | 0.2 | 0.2 | 0.2 |
| | | Surface roughness (Sa) | nm | 29 | 29 | 29 | 29 |
| | | Protrusion-like defect | defects/m$^2$ | 0.3 | 0.3 | 0.3 | 0.3 |
| | Total thickness of thermoforming sheet | | mm | 0.37 | 0.37 | 0.37 | 0.37 |
| Evaluation results | Floating of C layer | | - | A | A | B | A |
| | Formability | | - | B | A | A | B |
| | Handleability during processing | | - | A | A | A | A |
| | Surface appearance of molded article | | - | A | A | A | A |
| | Haze | | % | 1.6 | 1.6 | 1.6 | 1.6 |
| | Pencil hardness of C layer after curing | | - | 3H | H | 3H | 3H |

Table 3

| Configuration | A layer | Polycarbonate (PC) resin | - | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| | | Polycarbonate (PC) resin | - | PC-A | PC-A | PC-A | PC-A | PC-A | PC-A | PC-A | PC-A | PC-A |
| | | Content of elastomer /100 parts by mass of PC resin | parts by mass | 10 | 10 | 10 | 10 | 10 | 10 | 10 | 10 | 10 |
| | | Glass transition temperature (Tg) | °C | 120 | 120 | 120 | 120 | 120 | 120 | 120 | 120 | 120 |
| | D layer | Type of resin | - | VH-001 | VH-001 | VH-001 | VH-001 | VH-001 | VH-001 | VH-001 | VH-001 | VH-001 |
| | | Glass transition temperature (Tg) | °C | 110 | 110 | 110 | 110 | 110 | 110 | 110 | 110 | 110 |
| | B layer | Type of resin | - | Urethane acrylate | Urethane acrylate | Urethane acrylate | Urethane acrylate | Urethane acrylate | Urethane acrylate | Urethane acrylate | Urethane acrylate | Urethane acrylate |
| | | Content ratio of hindered amine-based compound /100 parts by mass of composition B | parts by mass | 3 | 3 | 3 | 3 | 3 | 3 | 3 | 3 | 3 |
| | | Percentage of reaction of acrylate | % | 5 | 70 | 70 | 70 | 70 | 3 | 3 | 3 | 3 |
| | Thickness of stacked product excluding C layer | | mm | 0.3 | 0.3 | 0.3 | 0.3 | 0.3 | 0.3 | 0.3 | 0.3 | 0.3 |
| | Percentage of elongation ($\alpha$1) of stacked product in MD direction at 100°C | | % | 0.7 | 0.7 | 0.7 | 0.7 | 0.7 | 0.7 | 0.7 | 0.7 | 0.7 |
| | Percentage of elongation ($\alpha$2) of stacked product in TD direction at 100°C | | % | 0.7 | 0.7 | 0.7 | 0.7 | 0.7 | 0.7 | 0.7 | 0.7 | 0.7 |
| | C layer | Protection film | - | None | 7H52 | SPV-C6010 | R415A | SPV-TP-4030 | 7H52 | B-2 | NSA22T | SPV-C6010 |

EP 4 624 152 A1

24

EP 4 624 152 A1

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Type of resin | - | - | PP | PE | PP | Special PO | PP | Special PO | PET | PE |
| Type of pressure-sensitive adhesion | - | - | PE | Acryl | PE | Synthetic rubber | PE | Synthetic rubber | Acryl | Acryl |
| Thickness | μm | - | 30 | 60 | 30 | 35 | 30 | 70 | 25 | 60 |
| Release force | mN/25 mm | - | 7 | 289 | 540 | 90 | 7 | 1500 | 102 | 289 |
| Percentage of elongation (β1) in MD direction at 100°C | % | - | 2.8 | 6.1 | 4.4 | 2.6 | 2.8 | 3.3 | 0.1 | 6.1 |
| Percentage of elongation (β2) in TD direction at 100°C | % | - | 2.7 | 6.1 | 4.4 | 4.2 | 2.7 | 3.4 | 0.2 | 6.1 |
| Difference in percentage of elongation (β1 - β2) between MD-TD directions | % | - | 0.1 | 0 | 0 | -1.6 | 0.1 | -0.1 | -0.1 | 0 |
| Difference in percentage of elongation (β1 - α1) from stacked product in MD direction | % | - | 2.1 | 5.4 | 3.7 | 1.9 | 2.1 | 2.6 | -0.6 | 5.4 |
| Difference in percentage of elongation (β2 - α2) from stacked product in TD direction | % | - | 2.0 | 5.4 | 3.7 | 3.5 | 2.0 | 2.7 | -0.5 | 5.4 |
| Surface roughness (Sa) | nm | - | 19 | 65 | 159 | 24 | 19 | 32 | 39 | 65 |

25

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| | | Protrusion-like defect | defects/m$^2$ | - | 0.0 | 2.1 | 0.5 | 13 | 0.0 | 8.5 | 0.2 | 2.1 |
| | Total thickness of thermoforming sheet | | mm | 0.30 | 0.33 | 0.36 | 0.33 | 0.34 | 0.33 | 0.37 | 0.33 | 0.36 |
| Evaluation results | Floating of C layer | | - | - | A | A | A | A | C | C | C | C |
| | Formability | | - | A | C | C | C | C | A | A | A | A |
| | Handleability during processing | | - | C | C | A | A | A | C | C | A | A |
| | Surface appearance of molded article | | - | A | A | A | A | A | A | C | A | B |
| | Haze | | % | 0.5 | 0.5 | 0.5 | 0.5 | 0.5 | 0.5 | 0.4 | 2.7 | 5.1 |
| | Pencil hardness of C layer after curing | | - | 3H | 3H | 3H | 3H | 3H | 3H | 3H | 3H | 3H |

INDUSTRIAL APPLICABILITY

The thermoforming sheet and the decorative sheet of the present disclosure can be reduced or suppressed in the occurrence of floating of the releasable layer during thermoforming, and are excellent in handleability, thermoformability, and the like, and therefore any formed product with the thermoforming sheet and the decorative sheet is useful for, for example, interior materials and exterior materials for automobiles, indicator panels for automobiles, electric appliances, cases for cosmetics, interior parts and exterior parts for building materials, cases for various instruments or products, cases for sundries, switches, keys, key pads, handles, levers, buttons, and housings or exterior components for home-appliances-AV equipment (for example, personal computers), cellular phones and mobile devices.

REFERENCE SIGNS LIST

    100 thermoforming sheet
    101 layer (A layer) comprising thermoplastic resin
    103 layer (B layer) formed from uncured product of (meth)acrylate-based active energy ray-curable resin composition (composition B)
    105 layer (C layer) releasable from B layer
    107 surface of A layer, located opposite to B layer
    109 surface of C layer, located facing B layer

**Claims**

1. A thermoforming sheet obtained by stacking at least three layers of

    a layer (A layer) comprising a thermoplastic resin,
    a layer (B layer) formed from an uncured product of a (meth)acrylate-based active energy ray-curable resin composition (composition B), and
    a layer (C layer) releasable from the B layer
    in the listed order, wherein
    $\beta1 - \alpha1$ is -0.5% or more and 5.0% or less when a percentage of elongation in an MD direction at 100°C of the C layer is defined as $\beta1$ (%) and a percentage of elongation in an MD direction at 100°C of a stacked product obtained by releasing the C layer from the thermoforming sheet is defined as $\alpha1$ (%).

2. The thermoforming sheet according to claim 1, wherein $\beta1 - \beta2$ is -2.0% or more and 4.0% or less when a percentage of elongation in a TD direction at 100°C of the C layer is defined as $\beta2$ (%).

3. The thermoforming sheet according to claim 1 or 2, wherein the C layer comprises an unstretched thermoplastic resin layer or a biaxially stretched thermoplastic resin layer.

4. The thermoforming sheet according to claim 1 or 2, wherein a release force from the B layer in the C layer is 10 mN/25 mm or more and 1,000 mN/25 mm or less.

5. The thermoforming sheet according to claim 1 or 2, wherein a protrusion-like defect having a height of 5 $\mu$m or more and an area of 0.1 mm$^2$ or more, present on a surface of the C layer, the surface being located facing the B layer, is at a rate of 10 defects/m$^2$ or less.

6. The thermoforming sheet according to claim 1 or 2, wherein a surface roughness (Sa) of the C layer, the surface being located facing the B layer, is 150 nm or less.

7. The thermoforming sheet according to claim 1 or 2, wherein a percentage of reaction of the (meth)acrylate contained in the B layer is 2% or more and 50% or less.

8. The thermoforming sheet according to claim 1 or 2, wherein the C layer comprises at least one resin selected from the group consisting of a polycarbonate-based resin, polypropylene and a modified polyolefin-based resin.

9.  The thermoforming sheet according to claim 1 or 2, wherein the A layer comprises a polycarbonate-based resin.

10. The thermoforming sheet according to Claim 9, wherein the A layer contains 1 to 20 parts by mass of a polyester-based thermoplastic elastomer based on 100 parts by mass of the polycarbonate-based resin.

11. The thermoforming sheet according to claim 1 or 2, wherein the thermosetting sheet comprises a layer (D layer) comprising a (meth)acrylic resin, between the A layer and the B layer.

12. A decorative sheet comprising a design layer on a surface of the A layer of the thermoforming sheet according to claim 1 or 2, the surface being located opposite to the B layer.

# Fig. 1

## INTERNATIONAL SEARCH REPORT

| International application No. |
|---|
| **PCT/JP2023/040572** |

**A. CLASSIFICATION OF SUBJECT MATTER**

*B32B 27/30*(2006.01)i; *B29C 51/14*(2006.01)i; *B32B 27/00*(2006.01)i; *B32B 27/36*(2006.01)i
FI: B32B27/30 A; B29C51/14; B32B27/00 E; B32B27/36 102

According to International Patent Classification (IPC) or to both national classification and IPC

**B. FIELDS SEARCHED**

Minimum documentation searched (classification system followed by classification symbols)

B32B27/30; B29C51/14; B32B27/00; B32B27/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-160099 A (TEIJIN LTD.) 19 October 2022 (2022-10-19)<br>entire text, all drawings | 1-12 |
| A | JP 2021-146687 A (TEIJIN LTD.) 27 September 2021 (2021-09-27)<br>entire text, all drawings | 1-12 |
| A | JP 2016-022616 A (TEIJIN LTD.) 08 February 2016 (2016-02-08)<br>entire text, all drawings | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/040572**

| Patent document cited in search report | | | Publication date (day/month/year) | Patent family member(s) | Publication date (day/month/year) |
|---|---|---|---|---|---|
| JP | 2022-160099 | A | 19 October 2022 | (Family: none) | |
| JP | 2021-146687 | A | 27 September 2021 | (Family: none) | |
| JP | 2016-022616 | A | 08 February 2016 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022014674 A

- WO 2020116576 A